# EUROPÄISCHE PATENTSCHRIFT

(11) **EP 2 857 699 B1**
(45) Veröffentlichungstag und Bekanntmachung des Hinweises auf die Patenterteilung: **03.08.2022**
(21) Anmeldenummer: 14169587.4
(22) Anmeldetag: 23.05.2014
(51) Int. Cl.: F16B 23/00, F16B 37/12, B25B 27/14

(54) **Gewindebuchse zum Einschrauben**
Screw-in threaded bush
Douille taraudée à visser

(30) Priorität: 02.08.2013 DE 102013215291
(43) Veröffentlichungstag der Anmeldung: 08.04.2015
(73) Patentinhaber: IMS-Verbindungstechnik GmbH & Co. KG, 74632 Neuenstein (DE)
(72) Erfinder: Humm, Siegfried, 74214 Schöntal (DE); Eckert, Rainer, 97990 Weikersheim (DE)
(74) Vertreter: Patentanwälte Ruff, Wilhelm, Beier, Dauster & Partner mbB

(56) Entgegenhaltungen:
- EP-A1- 0 443 134
- FR-A1- 2 645 922
- GB-A- 1 603 117
- GB-A- 2 002 866
- US-A- 327 612
- US-A- 3 160 189

## Beschreibung

Die Erfindung betrifft eine Anordnung einer Gewindebuchse zum Einschrauben in ein Werkstück, eine Verwendung einer Anordnung und ein Verfahren zum Einschrauben einer Gewindebuchse.

Gewindebuchsen dieser Art sind bekannt. Sie dienen einerseits zum Herstellen eines Gewindes in einem Werkstück oder auch zum Reparieren eines beschädigten Gewindes in einem Werkstück. Gewindebuchsen haben ein Außengewinde, bei dem es sich um ein selbstschneidendes oder um ein selbstfurchendes Gewinde handeln kann.

Bei einer bekannten Gewindebuchse dieser Art (GB 2237615 A) weist die Gewindebuchse vier von ihrem führenden Ende ausgehende Axialschlitze auf, deren Kanten dafür sorgen, dass das Gewinde geschnitten wird. Die Gewindebuchse hat an ihrem den Schlitzen gegenüberliegenden Ende einen Bund, der an dem Werkstück zur Anlage gelangt. In die Gewindebuchse wird von ihrem dem Bund aufweisenden Ende eine Schraube eingeschraubt. Eine Zugbelastung wirkt also in der von dem den Bund aufweisenden Ende wegführenden Richtung.

Ebenfalls bekannt ist eine Gewindebuchse mit einem an ihrer Außenseite ausgebildeten selbstfurchenden Gewinde (EP 1929163 B1). Auch diese Gewindebuchse weist an einem Ende einen Bund auf.

Weiterhin bekannt ist eine Gewindebuchse zum Einschrauben in Holz oder dergleichen, die an ihrer Außenseite eine einzelne sich längs einer Schraubenlinie erstreckende Kante aufweist (US 3,160,189).

Ebenfalls bekannt ist ein metallischer Gewindeeinsatz zum Einschrauben in konische Öffnungen, der konisch ausgebildet ist und an seiner Außenseite ein feines Gewinde aufweist. Für spröde Kunststoffe ist der Einsatz in Längsrichtung mit einem durchgehenden Schneidschlitz versehen (EP 0 443 134 A1).

Zum Einschrauben einer Gewindebuchse ist ein Werkzeug bekannt, das einerseits die Gewindebuchse einschraubt und bei vollständig eingeschraubter Gewindebuchse eine Verformung des vorderen Endes der Gewindebuchse durch weiteres Ausformen des Innengewindes bewirkt (EP 1929163 B1).

Weiterhin bekannt ist ein Werkzeug zum Einschrauben einer Gewindebuchse, bei dem ein mit einem Handgriff versehenes Aufweitwerkzeug in das Innengewinde einer Buchse eingeschraubt wird, die Buchse in das Werkstück eingeschraubt wird und gegen Ende des Vorgangs das Aufweitwerkzeug bei feststehender Buchse weiter bewegt wird (GB 1603117).

Die bekannten Gewindebuchsen sind in der Regel zum Einschrauben in metallisches Material bestimmt, und ihr Außengewinde ist symmetrisch.

Eine Gewindebuchse mit einem Bund und einem asymmetrischen Außengewinde ist aus der Offenlegungsschrift FR 2 645 922 A1 bekannt. Die bekannte Gewindebuchse wird in ein Bauteil eingeschraubt, so dass der Bund der Gewindebuchse an dem Bauteil anliegt. Eine Schraube wird bundseitig in die Gewindebuchse eingeschraubt.

Eine Anordnung einer Gewindebuchse zum Einschrauben in Löcher in einem Werkstück mit einem Bund an einem Ende einer Gewindebuchse mit konischem Außengewinde, einem Innengewinde und einem Außengewinde, das als selbstschneidendes oder selbstfurchendes Gewinde ausgebildet ist, wobei sich das Außengewinde mit einer Vielzahl von Gewindewindungen über die gesamte Länge der Gewindebuchse mit Ausnahme des Bundes erstreckt, in einem durch das Werkstück durchgehenden Loch, wobei die Gewindebuchse von einer ersten Seite in das Werkstück eingeschraubt ist und die Schraube von einer zweiten Seite des Werkstücks her, die der ersten Seite gegenüberliegt, in die Gewindebuchse eingeschraubt ist und wobei die Schraube die Gewindebuchse auf Zug belastet, so dass der Bund der Gewindebuchse an dem bei Belastung auf Druck beanspruchten, die Bohrung umgebenden Rand des Werkstücks anliegt, ist in der US 327 612 A offenbart. Die Gewindebuchse mit konischem Außengewinde ist für die Verwendung in Holz oder Material, in dem sie sich ihr eigenes Gewinde schneidet, vorgesehen. Eine Gewindebuchse mit zylindrischem Außengewinde kann vorgesehen sein, wenn die Gewindebuchse in Stahl eingesetzt wird.

Der Erfindung liegt die Aufgabe zu Grunde, eine in ihrer Haltekraft verbesserte Befestigungsmöglichkeit bei Gewindebuchsen zu schaffen. Insbesondere soll die Gewindebuchse zur Anbringung in CFK geeignet sein.

Zur Lösung dieser Aufgabe schlägt die Erfindung eine Anordnung einer Gewindebuchse mit den im Anspruch 1 genannten Merkmalen, eine Verwendung mit den im Anspruch 9 genannten Merkmalen und ein Verfahren mit den in Anspruch 10 genannten Merkmalen vor. Die Gewindebuchse enthält also an ihrem einen Ende einen Bund, der nach außen vorsteht. Sie enthält ein Innengewinde und ein Außengewinde, das entweder als selbstschneidendes oder als selbstfurchendes Gewinde ausgebildet ist und das als asymmetrisches Gewinde ausgebildet ist. Die Gewindebuchse ist zum Einschrauben in Löcher vorgesehen, beispielsweise Bohrungen wie Sackbohrungen oder Durchgangsbohrungen, im Werkstück, das beispielsweise durch Spritzen geformt ist, bereits vorhandene Löcher oder Öffnungen oder auch gestanzte Löcher. Die Erfindung schlägt die Anordnung einer Gewindebuchse mit einem Bund an einem Ende der Gewindebuchse, einem Innengewinde und einem Außengewinde, das als selbstschneidendes oder selbstfurchendes Gewinde ausgebildet ist, in einem durch ein Werkstück durchgehendes Loch vor, bei der der Bund der Gewindebuchse an dem bei Belastung auf Druck beanspruchten, die Bohrung umgebenden Rand des Werkstücks anliegt. Dies vergrößert die Haltekraft der Verbindung zwischen Gewindebuchse und Werkstück. Mit anderen Worten wird die Gewindebuchse so angeordnet, dass sich der Bund bei der vorgesehenen Belastungsrichtung am Werkstück abstützt. In seltenen Fällen wird eine Schraube auf Druck belastet, also in die Gewindebuchse hineingedrückt. In einem solchen Fall würde der Bund der Gewindebuchse auf der Seite des Werkstücks liegen, die dem Schraubenkopf zugewandt ist. Üblicherweise aber wird die Schraube auf Zug belastet. In diesem Fall wird der Bund der Gewindebuchse auf der Seite des Werkstücks angeordnet, die dem Schraubenkopf abgewandt ist.

In Weiterbildung der Erfindung kann vorgesehen sein, dass die näher an einer Querebene zur Längsachse angeordnete Gewindeflanke in die Belastungsrichtung der Gewindebuchse zeigt. Bei allen Ausführungsformen des asymmetrischen Gewindes läuft die Querebene durch die radial außen liegende Kante oder den radial außen liegenden Bereich, in dem sich die beiden Gewindeflanken treffen. Das asymmetrische Gewinde weist eine erste Gewindeflanke auf, die näher an einer Querebene zur Längsachse angeordnet ist und eine zweite Gewindeflanke, die weiter entfernt von der Querebene angeordnet ist. Wenn das asymmetrische Gewinde im Querschnitt dreieckförmig ist, ist die erste Gewindeflanke dadurch näher an der Querebene, die durch die Spitze des Dreiecks läuft, angeordnet, indem die erste Gewindeflanke einen kleineren Winkel mit der Querebene einschließt als die zweite Gewindeflanke. Die näher an der Querebene angeordnete erste Gewindeflanke zeigt dann in die Belastungsrichtung, so dass diese erste Gewindeflanke vorrangig eine Belastung der Gewindebuchse durch eine Zugkraft oder Druckkraft in das Werkstück einleitet.

Um die Gewindebuchse in das Werkstück unter Bildung eines Gewindes einzuschrauben, wird üblicherweise ein Werkzeug verwendet, das in das Innengewinde der Gewindebuchse eingeschraubt wird. Um dies mit einem einfach aufgebauten Werkzeug zu ermöglichen, kann in Weiterbildung der Erfindung vorgesehen sein, dass das Innengewinde der Gewindebuchse von dem den Bund aufweisenden Ende der Gewindebuchse ausgeht.

Gewindebuchsen in einer Anordnung der von der Erfindung vorgeschlagenen Art müssen fest mit dem Werkstück verbunden werden, so dass nach Ihrer Montage eine Schraube in das Innengewinde eingeschraubt werden kann, ohne dass sich die Gewindebuchse dabei verdreht. Die Gewindebuchsen müssen also fest mit dem Werkstück verbunden werden, gegebenenfalls auch gasdicht. Dies geschieht beispielsweise dadurch, dass die Gewindebuchse an einem ihrer Enden von innen her aufgeweitet wird, so dass sie sich mit dem Loch verklemmt. Eine Möglichkeit, wie dies geschehen kann, besteht darin, dass die Aufweitung durch das in die Buchse eingeschraubte Werkzeug geschieht. Um dies zu ermöglichen, ist erfindungsgemäß vorgesehen sein, dass das Innengewinde nicht vollständig bis zum Ende der Gewindebuchse reicht. Es kann sich dabei sowohl um das den Bund aufweisende Ende der Gewindebuchse als auch das gegenüberliegende Ende handeln.

In Weiterbildung der Erfindung kann vorgesehen sein, dass das Außengewinde der Gewindebuchse unmittelbar an den Bund anschließt.

In nochmaliger Weiterbildung der Erfindung kann vorgesehen sein, dass das Außengewinde an seiner näher an einer Querebene zur Längsachse angeordneten Gewindeflanke hinterschnitten ausgebildet ist. Dadurch wird Platz für einen größeren Materialeingriff geschaffen.

In weiterer Ausgestaltung der Erfindung kann vorgesehen sein, dass der Bund über den Außendurchmesser des Gewindes radial nach außen vorsteht. Er kann insbesondere eine in einer Ebene liegende Stirnfläche aufweisen.

Insbesondere handelt es sich bei dieser Anordnung um eine Gewindebuchse, wie sie hierin im Vorstehenden beschrieben wurde.

Die Erfindung schlägt ebenfalls die Verwendung einer Anordnung einer Gewindebuchse, wie sie hierin beschrieben wurde, zum Einschrauben in ein Loch eines Werkstücks aus Verbundmaterial vor, insbesondere aus faserverstärktem Kunststoff, beispielsweise CFK oder GFK. Dabei wird die Gewindebuchse in Weiterbildung so eingeschraubt, dass ihr Bund an dem bei Belastung auf Druck beanspruchten, die Bohrung umgebenden Rand des Werkstücks anliegt. Mit anderen Worten wird die Gewindebuchse so angeordnet, dass ihr Bund im vorgesehenen Hauptbelastungsfall gegen das Werkstück gedrückt wird. Nach dem Eindrehen einer Schraube wird die Gewindebuchse dann so belastet, dass der Bund auf Druck belastet ist.

Die Erfindung schlägt ebenfalls ein Verfahren zum Einbringen einer Gewindebuchse, wie sie hierin beschrieben wurde, in ein Loch eines Werkstücks vor, bei dem die Gewindebuchse von der einer Zugbelastung abgewandten Seite des Werkstücks in das Loch eingeschraubt wird, bis der Bund der Gewindebuchse an dem Rand des Lochs anliegt, und anschließend durch radiales Aufweiten der Gewindebuchse mit dem Werkstück verklemmt wird.

Das radiale Aufweiten der Gewindebuchse zur Herstellung der Verklemmung mit dem Werkstück kann insbesondere durch Einformen eines Gewindes in einem Abschnitt der Gewindebuchse erfolgen, in dem vorher kein Innengewinde oder ein nur unvollständig ausgeprägtes Innengewinde vorhanden war.

Ein Werkzeug zum Einbringen von Gewindebuchsen mit einem Außengewinde an der Außenseite der Gewindebuchse und einem Innengewinde an der Innenseite der Gewindebuchse enthält einen Werkzeugkörper und eine Schiebehülse sowie eine Feder. In dem Werkzeug ist die als Aufweitwerkzeug dienende Welle angeordnet. Das Werkzeug benötigt insgesamt nur vier Bauteile. Es ist daher sehr einfach aufgebaut. Die Feder kann zur Beaufschlagung der Schiebehülse gegenüber dem Werkzeugkörper in eine Einschraubrichtung der Gewindebuchse vorgesehen sein.

Bei dem Drehangriff zum Verdrehen der Welle und/oder des Werkzeugkörpers kann es sich um einen Vierkant oder eine sonstige übliche Ausbildung handeln.

Die Schiebehülse kann in dem Inneren des Werkzeugkörpers angeordnet und geführt sein und an dessen vorderen Ende aus dem Werkzeugkörper herausragen.

Bei der Feder kann es sich insbesondere um eine Schraubendruckfeder handeln, die ebenfalls im Inneren des Werkzeugkörpers angeordnet und daher gegen Verschmutzung, Beschädigung oder dergleichen geschützt ist.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Einzelmerkmale der unterschiedlichen Ausführungsformen können dabei in beliebiger Weise kombiniert werden, ohne den Rahmen der Erfindung zu überschreiten. In der

### Zeichnung zeigen:

- Figur 1: einen Längsschnitt durch eine Gewindebuchse nach der Erfindung;
- Figur 2: im gleichen Maßstab eine Seitenansicht der Gewindebuchse der Figur 1;
- Figur 3: in vergrößertem Maßstab einen Schnitt durch die Ausbildung des Außengewindes der Gewindebuchse der Figur 1 und Figur 2;
- Figur 4: eine der Figur 3 entsprechende Darstellung bei einer geänderten Ausführungsform des Außengewindes;
- Figur 5: eine der Figur 1 entsprechende Darstellung einer geänderten Ausführungsform der Gewindebuchse;
- Figur 6: eine der Figur 3 entsprechende Darstellung des Außengewindes der Gewindebuchse der Figur 5;
- Figur 7: eine der Figur 4 entsprechende Darstellung des Außengewindes einer gegenüber Figur 6 abgeänderten Ausführungsform;
- Figur 8: einen Längsschnitt durch ein Werkzeug zum Einschrauben einer Gewindebuchse;
- Figur 9: eine Seitenansicht des Werkzeugs der Figur 8 im gleichen Maßstab und
- Figur 10: eine Schnittansicht eines Werkstücks, in das eine erfindungsgemäße Gewindebuchse eingesetzt werden soll.

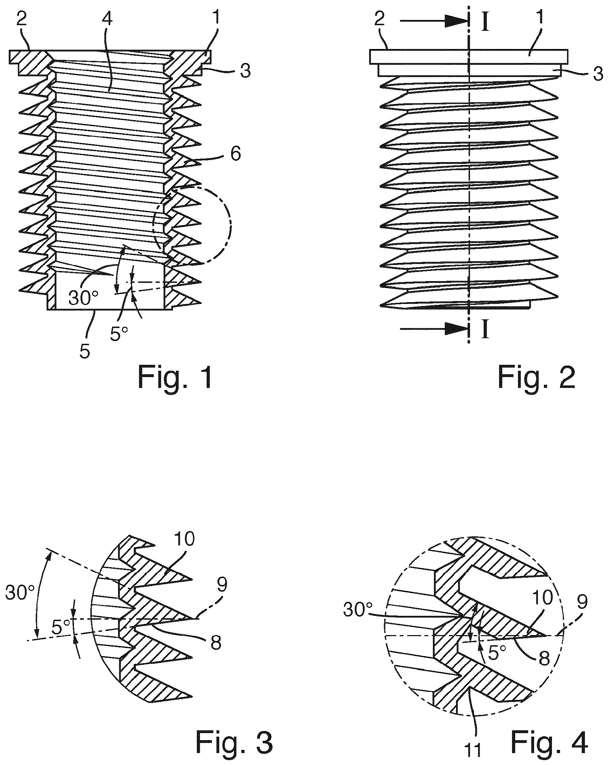

Die Figuren 1 bis 3 zeigen eine erste Ausführungsform einer von der Erfindung vorgeschlagenen Gewindebuchse. Die Gewindebuchse enthält an ihrem einen, in Figur 1 oberen Ende einen Bund 1, der eine ebene ringförmige Stirnfläche 2 aufweist. Der Bund 1 bildet gleichzeitig den im Durchmesser größten Teil der Gewindebuchse. Wie man sowohl dem Schnitt der Figur 1 als auch der Seitenansicht der Figur 2 entnehmen kann, besitzt der Bund 1 eine Stufe 3, so dass der Durchmesser des Bundes unterhalb des Bereichs mit dem größeren Durchmesser einen verringerten Durchmesser aufweist.

An der Innenseite der Gewindebuchse, siehe Figur 1, ist ein Innengewinde 4 ausgebildet, das an dem mit dem Bund 1 versehenen Ende der Gewindebuchse beginnt und sich bis etwa zwei Windungen vor dem gegenüberliegenden Ende 5 fortsetzt. Dort endet das Gewinde 4. Das Gewinde 4 ist ein übliches symmetrisches Gewinde mit konstanter Steigung.

An der Außenseite der Gewindebuchse ist ein Außengewinde 6 ausgebildet, das unmittelbar unterhalb des Bundes 1 beginnt, sich also an den Bund 1 anschließt. Das Außengewinde 6 weist die gleiche Steigung wie das Innengewinde 4 auf, aber natürlich nicht den gleichen Durchmesser. Die Zuordnung zwischen dem Innengewinde 4 und dem Außengewinde 6 ist so gewählt, dass an jeder Stelle die Gewindekante des Innengewindes auch etwa an der gleichen Stelle liegt wie die Gewindekante des Außengewindes. Die Gewindekante des Innengewindes greift also in den Bereich ein, wo die Gewindewindung des Außengewindes 6 vorhanden ist. Dadurch erhält die Gewindebuchse in etwa überall die gleiche Wandstärke.

Während das Innengewinde nicht bis zum Ende 5 der Gewindebuchse reicht, geht das Außengewinde 6 über die gesamte Länge der Gewindebuchse.

Wie man schon der Figur 1 und Figur 2 entnehmen kann, ist das Außengewinde 6 der Gewindebuchsen unsymmetrisch. Dies geht aus dem vergrößerten Teilschnitt der Figur 3 noch deutlicher hervor. Die Gewindewindung des Gewindes 6 enthält eine erste Gewindeflanke 8, die näher an einer quer zur Längsachse der Gewindebuchsen verlaufende Ebene 9 liegt, und eine zweite Gewindeflanke 10, die einen größeren Winkel mit der Querebene 9 einschließt. Mit anderen Worten schließt die erste Gewindeflanke 8 mit der Querebene 9 einen kleineren Winkel ein als die zweite Gewindeflanke 10.

Beispielsweise schließen die beiden Gewindeflanken 8,10 einen Winkel von etwa 30° miteinander ein, und die Gewindeflanke 8 einen Winkel von etwa 5° mit der Querebene 9.

Die Figur 4 zeigt einen der Figur 2 entsprechenden Schnitt durch eine nur im Bereich des Außengewindes 6 abgeänderte Ausführungsform. Die näher an der Querebene 9 angeordnete erste Gewindeflanke 8 weist hier im Bereich des Gewindegrunds einen Hinterschnitt 11 auf. Material des Werkstücks im Bereich der Bohrungswand, das bei dem Einformen des Gewindes durch die Gewindebuchse verdrängt oder gelöst wird, kann in diesen Hinterschnitt 11 eindringen.

Die Gewindeflanke 8, die näher an der Querebene 9 liegt, bildet die Auflagefläche für den Kraftangriff. Sie ist bei der Ausführungsform der Figuren 1 bis 4 zu dem Ende der Gewindebuchse gerichtet, das den Bund 1 nicht aufweist. Daher ist die Gewindebuchse der Figuren 1 bis 4 besonders für den Fall geeignet, dass an der Gewindebuchse eine Zugkraft in Richtung nach unten in Figur 1 angreift oder eine Druckkraft von oben in Figur 1.

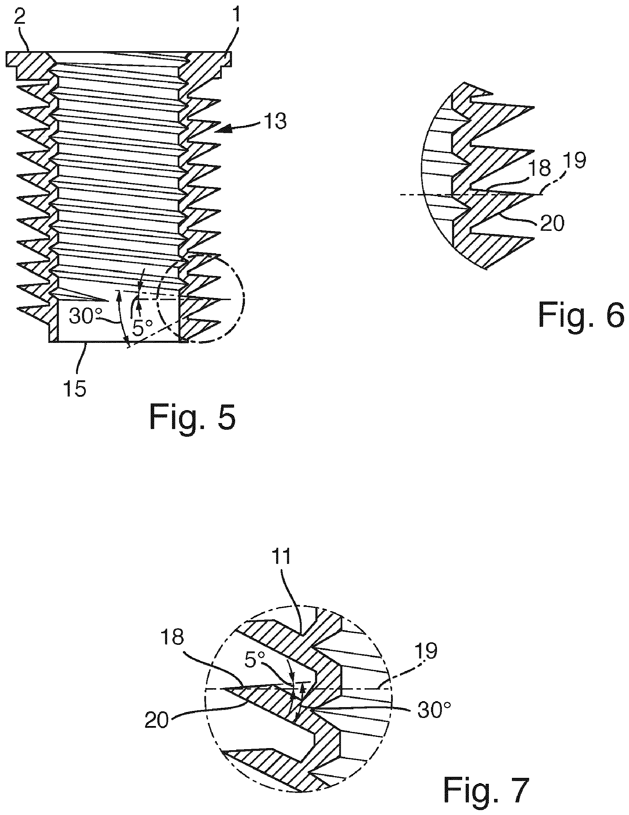

Nun zu einer weiteren Ausführungsform, die in Figur 5 und Figur 6 dargestellt ist. Die Figur 5 entspricht dabei der Darstellung der Figur 1, stellt also einen Längsschnitt durch eine Gewindebuchse dieser Ausführungsform dar. Der einzige Unterschied zu der Ausführungsform der Figur 1 liegt darin, dass jetzt die Gewindeflanken 8, 10 des Außengewindes 13 eine umgekehrte Orientierung aufweisen. Die näher an der Querebene 19 angeordnete Gewindeflanke 18 ist in Richtung auf das den Bund 1 aufweisende Ende der Gewindebuchse gerichtet, während die jeweils andere Gewindeflanke 20 in Richtung auf das den Bund 1 nicht aufweisende Ende 15 der Gewindebuchse gerichtet ist. Die Gewindebuchse der Fig. 5 ist also besonders für den Fall geeignet, dass an der Gewindebuchse eine Zugkraft in Richtung nach oben in Fig. 1 angreift oder eine Druckkraft in Richtung von unten in Fig. 1. Im Übrigen sind die Ausführungsformen nach Figur 1 bis 3 einerseits und nach Figur 5 und 6 andererseits identisch, so dass auf eine Wiederholung der anderen Einzelheiten verzichtet wird.

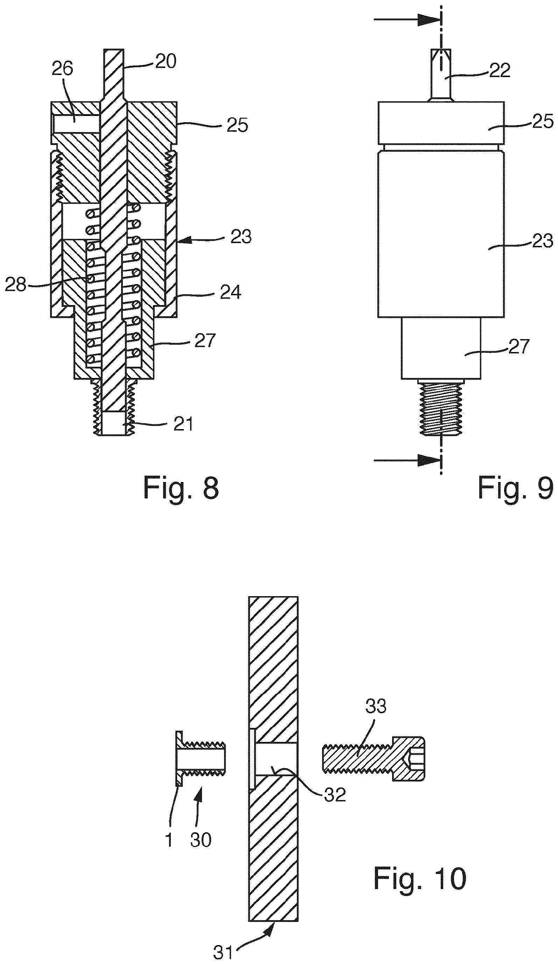

Das Außengewinde, das in Figur 8 in vergrößertem Maßstab dargestellt ist, entspricht dem Außengewinde nach Figur 4, enthält also ebenfalls einen Hinterschnitt 11, der in der die Auflagefläche für den Kraftangriff bildenden Gewindeflanke 18 im Bereich des Gewindegrunds ausgebildet ist.

Die Gewindebuchse nach den Figuren wird so befestigt, dass sie mithilfe eines noch zu beschreibenden Werkzeugs mit dem, den Bund 1 nicht aufweisenden Ende voraus in ein kein Gewinde aufweisendes Loch des Werkstücks eingesetzt und solange verdreht wird, bis der Bund 1 an dem Rand der Öffnung bzw. Bohrung anliegt. Dabei schneidet bzw. formt sich das Gewinde in der Wand der Bohrung sein Gewinde. Anschließend wird mithilfe des Werkzeugs die Gewindebuchse im Bereich des Endes, in dem das Innengewinde 4 nicht ausgebildet ist, durch das Werkzeug nach außen verpresst, so dass damit eine kraftschlüssige Festlegung der Gewindebuchse in dem Werkstück erfolgt.

Die Belastung der Gewindebuchse durch eine eingeschraubte Schraube erfolgt dabei bei der Ausführungsform nach den Figuren 1 bis 4 in den Figuren nach unten, also in einer Richtung, die von dem mit dem Bund 1 versehenen Ende zu dem keinen Bund 1 aufweisenden Ende verläuft.

Bei der Ausführungsform der Figuren 5 bis 7 erfolgt die Belastung nach oben, also in einer Richtung, die von dem keinen Bund 1 aufweisenden Ende der Gewindehülse zu dem den Bund 1 aufweisenden Ende verläuft.

Die Figuren 8 und 9 zeigen ein mögliches Werkzeug, mit dem eine Gewindebuchse, wie sie in den vorhergehenden Figuren dargestellt und beschrieben wurde, in einem Werkstück angebracht werden kann.

Das Werkzeug enthält als zentrales Element ein Aufweitwerkzeug 20 in Form einer Welle, die an ihrem vorderen für die Gewindebuchse 30 bestimmten Ende ein Außengewinde 21 aufweist, das dem Innengewinde 4 der Gewindebuchse entspricht. In dem Zustand der Fig. 8 ist die Welle mit ihrem Außengewinde 21 in das Innengewinde der Gewindebuchse 30 eingeschraubt. Wie bereits beschrieben wurde, endet das Innengewinde 4 der Buchse 30 vor deren unterem Ende, siehe Fig. 1 und Fig. 5, so dass die Gewindebuchse 30 in Fig. 8 über das Ende der Welle hinausragt. Am gegenüberliegenden Ende weist das Aufweitwerkzeug eine Ausbildung zum Angriff eines Schlüssels auf, beispielsweise einen Vierkant 22, wie in Figur 9 dargestellt.

Das Aufweitwerkzeug ist in einem Werkzeugkörper 23 angeordnet, der eine Außenhülse 24 und eine mit der Außenhülse 24 verschraubte Einstellschraube 25 enthält. Das Aufweitwerkzeug 20 ist drehfest und axial unverschiebbar mit der Einstellschraube 25 verbunden, was beispielsweise mithilfe eines Gewindestifts erfolgen kann, der in eine Gewindebohrung 26 der Einstellschraube 25 eingeschraubt ist und an der Mantelfläche des Aufweitwerkzeugs 20 angreift.

In dem Werkzeugkörper 23 ist eine Abstandshülse 27 verschiebbar gelagert, die mit ihrem vorderen Ende aus einer Öffnung der Außenhülse 24 herausragt. Zwischen der Abstandshülse 27 und der Einstellschraube 25 ist eine Druckfeder 28 angeordnet.

Das in den Figuren 8 und 9 dargestellte Werkzeug wird folgendermaßen verwendet. Eine Gewindebuchse 30, insbesondere eine Gewindebuchse nach einer der Figuren 1 bis 7, wird mit dem Bund 1 voran auf das Gewinde 21 des Aufweitwerkzeugs 20 aufgeschraubt, bis der Bund 1 an der Unterseite der Abstandshülse 27 zur Anlage kommt. In dieser Position greift das Gewinde 21 des Aufweitwerkzeugs 20 in das Innengewinde 4 der Gewindebuchse nur über einen Teil der Länge der Gewindebuchse ein, also nicht bis zu dem Ende, an dem kein Gewinde 4 mehr vorhanden ist.

Nun wird durch Verdrehen des Aufweitwerkzeugs die Gewindebuchse 30 in das Loch im Werkstück eingeschraubt. Durch die Feder 28 wird eine Vorspannung zwischen der Abstandshülse 27 und der Gewindebuchse 30 erzeugt, die zu einer die Drehung der Gewindebuchse 30 bewirkenden Reibung führt. Die Vorspannung ist also so groß, dass das beim Eindrehen der Gewindebuchse 30 entstehende Drehmoment überwunden wird.

Sobald die Unterseite der Abstandshülse 27 auf der Oberseite des Werkstücks zur Anlage kommt, wird die Federkraft überwunden, die Gewindebuchse 30 wird nicht weiter eingeschraubt und das Aufweitwerkzeug 20 wird weiter in die jetzt feststehende Gewindebuchse eingeschraubt, wobei die Abstandshülse 27 in den Werkzeugkörper 23 eingeschoben wird. Sobald die Unterseite der Abstandshülse 27 auf der Oberseite des Werkstücks aufliegt, fluchtet bei der dargestellten Ausführungsform die Oberseite des Bundes 1 der Gewindebuchse 30 mit der Oberseite des Werkstücks und die Unterseite des Bundes ist im Werkstück angeordnet oder liegt auf diesem auf, so dass auch dadurch die Drehung der Buchse gestoppt wird. Das Gewinde 21 des Aufweitwerkzeugs 20 formt jetzt das Innengewinde 4 weiter und presst dadurch den ursprünglich gewindefreien Endbereich der Gewindebuchse 30 radial nach außen. Dies führt dann zu der Festlegung der Gewindebuchse 30 in der Bohrung.

Durch Verdrehen der Einstellschraube 25 kann die Vorspannkraft der Feder 28 und die Eindringtiefe des Aufweitwerkzeugs in die Gewindebuchse verstellt werden.

Die schematische Darstellung der Fig. 10 zeigt eine Schnittansicht eines Werkstücks 31, beispielsweise aus CFK- oder Kohlefaserverbundmaterial, das mit einer Stufenbohrung 32 versehen ist. Die Stufenbohrung 32 weist einen flachen Abschnitt mit großem Durchmesser auf, der für die Aufnahme des Bundes 1 der Gewindebuchse 30 vorgesehen ist, und einen längeren, das Werkstück 31 vollständig durchquerenden Abschnitt, in dessen Wandung dann von der Gewindebuchse 30 ein Gewinde eingeformt werden soll.

Wie beschrieben wurde, wird die Gewindebuchse 30 von der in Fig. 10 links dargestellten Seite mit dem in Fig. 8 und Fig. 9 gezeigten Einschraubwerkzeug in das Loch 32 eingesetzt. Eine Schraube 33, die in dem Werkstück 31 verankert werden soll, wird dann von der in Fig. 10 rechten Seite in die Gewindebuchse 30 eingeschraubt. Die Schraube 33 belastet die Gewindebuchse 30 auf Zug, d. h. in der Fig. 10 von links nach rechts. Bei dieser Zugbelastung sorgt der Bund 1 zusätzlich zu dem Außengewinde der Gewindebuchse 30 für einen sicheren Halt der Gewindebuchse 30 in dem Werkstück 31. Erfindungsgemäß wird somit die Gewindebuchse 30 von einer ersten Seite in das Werkstück 31 eingeschraubt und die zu befestigende Schraube 33 wird dann von einer zweiten Seite des Werkstücks 31 her, die der ersten Seite gegenüber liegt, in die Gewindebuchse 30 eingeschraubt.

Die Gewindebuchse 30 besteht beispielsweise aus Stahl oder Edelstahl und kann optional mit einer Beschichtung auf ihrer Innenseite und/oder ihrer Außenseite versehen sein. Solche Beschichtungen können beispielsweise als Korrosionsschutz oder als Gleitmittel dienen, wobei hierzu beispielsweise eine Beschichtung mit Teflon geeignet ist. Die Gewindebuchse 30 kann beispielsweise auch mit trockenem oder flüssigem Klebstoff beschichtet sein, um eine Verbindung mit dem Werkstück 31 zu verbessern. Optional kann vorgesehen sein, dass das Loch 32 vor dem Eindrehen der Gewindebuchse 30 mit einem Gewindeschneider mit einem Innengewinde versehen wird.

Der Bund 1 wird gegenüber dem Nenndurchmesser des Gewindes der Gewindebuchse 30 um 40% bis 60%, vorzugsweise 50% vergrößert. Die Gewindehöhe, die sich aus dem Quotienten des Kerndurchmessers des Gewindes der Gewindebuchse 30 und des Außendurchmessers des Gewindes berechnet, wird einerseits kleiner oder gleich 78% gewählt, soll andererseits jedoch größer oder gleich 60% sein. Ein Verhältnis zwischen Kerndurchmesser des Gewindes der Gewindebuchse 30 und dem Außendurchmesser des Gewindes der Gewindebuchse 30 liegt somit erfindungsgemäß in einem Bereich zwischen 0,6 und 0,78, wobei ein bevorzugter Bereich zwischen 0,7 und 0,78 liegt und ein besonders bevorzugter Wert bei 0,76 liegt.

## Patentansprüche

1. Anordnung einer Gewindebuchse zum Einschrauben in Löcher, mit
1.1 einem Bund (1) an einem Ende der zylindrischen Gewindebuchse,
1.2 einem Innengewinde (4) und
1.3 einem Außengewinde (6), das
1.4 als selbstschneidendes oder selbstfurchendes Gewinde ausgebildet ist, wobei
1.5 das Außengewinde (6) als asymmetrisches Gewinde ausgebildet ist und
1.6 sich mit einer Vielzahl von Gewindewindungen über die gesamte Länge der zylindrischen Gewindebuchse erstreckt, während das Innengewinde vor dem Einbringen der Gewindebuchse in ein Loch eines Werkstücks (31) nicht bis zum Ende (5) der Gewindebuchse reicht,
1.7 in einem durch das Werkstück (31) durchgehenden Loch (32), wobei die Gewindebuchse (30) von einer ersten Seite in das Werkstück (31) eingeschraubt ist und die Schraube von einer zweiten Seite des Werkstücks (31) her, die der ersten Seite gegenüberliegt, in die Gewindebuchse (30) eingeschraubt ist und wobei die Schraube (33) die Gewindebuchse (30) auf Zug belastet, so dass der Bund (1) der Gewindebuchse an dem bei Belastung auf Druck beanspruchten, die Bohrung umgebenden Rand des Werkstücks (31) anliegt.

2. Anordnung einer Gewindebuchse nach Anspruch 1, bei der die näher an einer Querebene (9; 19) zur Längsachse angeordnete Gewindeflanke (8, 18) in die Belastungsrichtung der Gewindebuchse zeigt.

3. Anordnung einer Gewindebuchse nach Anspruch 1 oder Anspruch 2, bei der das Innengewinde (4) von dem den Bund (1) aufweisenden ersten Ende der Gewindebuchse ausgeht.

4. Anordnung einer Gewindebuchse nach einem der vorhergehenden Ansprüche, bei der das Innengewinde (4) vor dem Einbringen der Gewindebuchse in das Loch des Werkstücks (31) nicht vollständig bis zu dem zweiten Ende der Gewindebuchse reicht.

5. Anordnung einer Gewindebuchse nach einem der vorhergehenden Ansprüche, bei der das Außengewinde (6) an den Bund (1) anschließt.

6. Anordnung einer Gewindebuchse nach einem der vorhergehenden Ansprüche, bei der das Außengewinde (6) an seiner näher an einer Querebene (9; 19) zur Längsachse angeordneten Gewindeflanke (8, 18) hinterschnitten ausgebildet ist.

7. Anordnung einer Gewindebuchse nach einem der vorhergehenden Ansprüche, bei der der Bund (1) über den Außendurchmesser des Außengewindes (6) radial nach außen vorsteht.

8. Anordnung einer Gewindebuchse nach einem der vorhergehenden Ansprüche, bei der ein Verhältnis zwischen dem Kerndurchmesser des Außengewindes der Gewindebuchse (30) und des Außendurchmessers des Außengewindes der Gewindebuchse (30) in einem Bereich zwischen 0,6 und 0,78, insbesondere in einem Bereich zwischen 0,7 und 0,78 und insbesondere in einem Bereich zwischen 0,76 und 0,78, liegt.

9. Verwendung einer Anordnung einer Gewindebuchse nach einem der Ansprüche 1 bis 8 zum Einschrauben in ein Loch (32) eines Werkstücks (31) aus Verbundmaterial, insbesondere aus faserverstärktem Kunststoff, beispielsweise kohlenstofffaserverstärkter Kunststoff (CFK) oder glasfaserverstärkter Kunststoff (GFK).

10. Verfahren zum Einbringen einer Gewindebuchse gemäß einer Anordnung nach einem der Ansprüche 1 bis 8 in ein Loch (32) eines Werkstücks (31), bei dem die Gewindebuchse (30) von der einer Zugbelastung abgewandten Seite des Werkstücks (31) in das Loch (32) eingeschraubt wird, bis der Bund (1) an dem Rand des Lochs (32) anliegt, und anschließend durch radiales Aufweiten der Gewindebuchse (30) mit dem Werkstück (31) verklemmt wird, wobei eine Schraube (33) in die Gewindebuchse (30) eingedreht wird und die Schraube (33) so belastet wird, dass der Bund (1) auf Druck belastet ist.

11. Verfahren nach Anspruch 10, bei dem die radiale Aufweitung durch Einformen eines Gewindes in einen vor dem Einbringen der Gewindebuchse in das Loch des Werkstücks (31) kein Gewinde aufweisenden Abschnitt der Gewindebuchse (30) erfolgt.

## Claims

1. Arrangement of a threaded bush for screwing into holes, comprising
1.1 a collar (1) at one end of the cylindrical threaded bush,
1.2 an internal thread (4) and
1.3 an external thread (6), which
1.4 is in the form of a self-cutting or self-tapping thread, wherein
1.5 the external thread (6) is in the form of an asymmetrical thread and
1.6 extends over the entire length of the cylindrical threaded bush by way of a multiplicity of thread turns, whereas, prior to the introduction of the threaded bush into a hole of a workpiece (31), the internal thread does not reach as far as the end (5) of the threaded bush,
1.7 in a hole (32) which passes through the workpiece (31), wherein the threaded bush (30) is screwed into the workpiece (31) from a first side, and the screw is screwed into the threaded bush (30) from a second side of the workpiece (31) that lies opposite the first side, and wherein the screw (33) subjects the threaded bush (30) to tensile load, such that the collar (1) of the threaded bush bears against the periphery of the workpiece (31), said periphery being subjected to pressure load during loading and surrounding the bore.

2. Arrangement of a threaded bush according to Claim 1, wherein the thread flank (8, 18) which is arranged closer to a transverse plane (9; 19) with respect to the longitudinal axis points in the loading direction of the threaded bush.

3. Arrangement of a threaded bush according to Claim 1 or Claim 2, wherein the internal thread (4) proceeds from the first end of the threaded bush, said first end comprising the collar (1).

4. Arrangement of a threaded bush according to one of the preceding claims, wherein, prior to the introduction of the threaded bush into the hole of the workpiece (31), the internal thread (4) does not fully reach as far as the second end of the threaded bush.

5. Arrangement of a threaded bush according to one of the preceding claims, wherein the external thread (6) adjoins the collar (1).

6. Arrangement of a threaded bush according to one of the preceding claims, wherein the external thread (6) is of undercut configuration at its thread flank (8, 18) which is arranged closer to a transverse plane (9; 19) with respect to the longitudinal axis.

7. Arrangement of a threaded bush according to one of the preceding claims, wherein the collar (1) protrudes radially outwards beyond the outer diameter of the external thread (6).

8. Arrangement of a threaded bush according to one of the preceding claims, wherein a ratio between the core diameter of the external thread of the threaded bush (30) and the outer diameter of the external thread of the threaded bush (30) lies in a range between 0.6 and 0.78, in particular in a range between 0.7 and 0.78, and in particular in a range between 0.76 and 0.78.

9. Use of an arrangement of a threaded bush according to one of Claims 1 to 8 for screwing into a hole (32) of a workpiece (31) composed of composite material, in particular composed of fibre-reinforced plastic, for example carbon-fibre-reinforced plastic (CFRP) or glass-fibre-reinforced plastic (GRP).

10. Method for introducing a threaded bush according to an arrangement according to one of Claims 1 to 8 into a hole (32) of a workpiece (31), wherein the threaded bush (30) is screwed into the hole (32) from that side of the workpiece (31) which faces away from a tensile loading until the collar (1) bears against the periphery of the hole (32), and is subsequently clamped with the workpiece (31) by radial widening of the threaded bush (30), wherein a screw (33) is screwed into the threaded bush (30) and the screw (33) is loaded in such a way that the collar (1) is subjected to pressure load.

11. Method according to Claim 10, wherein the radial widening is effected by forming of a thread into a portion of the threaded bush (30) that, prior to the introduction of the threaded bush into the hole of the workpiece (31), does not comprise a thread.

## Revendications

1. Agencement d'une douille filetée pour le vissage dans des trous, comprenant
1.1 un collet (1) à une extrémité de la douille filetée cylindrique,
1.2 un filetage intérieur (4) et
1.3 un filetage extérieur (6), qui
1.4 est réalisé sous forme de filetage autotaraudant ou autorainurant,
1.5. le filetage extérieur (6) étant réalisé sous forme de filetage asymétrique et
1.6 s'étendant avec une pluralité de filets sur toute la longueur de la douille filetée cylindrique, tandis que le filetage intérieur n'atteint pas l'extrémité (5) de la douille filetée avant l'insertion de la douille filetée dans un trou d'une pièce (31),
1.7 dans un trou (32) traversant la pièce (31), la douille filetée (30) étant vissée dans la pièce (31) depuis un premier côté et la vis étant vissée dans la douille filetée (30) depuis un deuxième côté de la pièce (31), qui est opposé au premier côté, et la vis (33) chargeant la douille filetée (30) en traction, de telle sorte que le collet (1) de la douille filetée s'applique sur le bord de la pièce (31) entourant l'alésage, sollicité en pression lors de la charge.

2. Agencement d'une douille filetée selon la revendication 1, dans lequel le flanc de filetage (8, 18) agencé plus près d'un plan transversal (9 ; 19) par rapport à l'axe longitudinal est orienté dans la direction de charge de la douille filetée.

3. Agencement d'une douille filetée selon la revendication 1 ou la revendication 2, dans lequel le filetage intérieur (4) part de la première extrémité de la douille filetée présentant le collet (1).

4. Agencement d'une douille filetée selon l'une quelconque des revendications précédentes, dans lequel le filetage intérieur (4) n'atteint pas entièrement la deuxième extrémité de la douille filetée avant l'insertion de la douille filetée dans le trou de la pièce (31).

5. Agencement d'une douille filetée selon l'une quelconque des revendications précédentes, dans lequel le filetage extérieur (6) se raccorde au collet (1).

6. Agencement d'une douille filetée selon l'une quelconque des revendications précédentes, dans lequel le filetage extérieur (6) est réalisé en contre-dépouille sur son flanc de filetage (8, 18) agencé plus près d'un plan transversal (9 ; 19) par rapport à l'axe longitudinal.

7. Agencement d'une douille filetée selon l'une quelconque des revendications précédentes, dans lequel le collet (1) fait saillie radialement vers l'extérieur au-delà du diamètre extérieur du filetage extérieur (6).

8. Agencement d'une douille filetée selon l'une quelconque des revendications précédentes, dans lequel le rapport entre le diamètre de noyau du filetage extérieur de la douille filetée (30) et le diamètre extérieur du filetage extérieur de la douille filetée (30) se situe dans une plage comprise entre 0,6 et 0,78, notamment dans une plage comprise entre 0,7 et 0,78, et notamment dans une plage comprise entre 0,76 et 0,78.

9. Utilisation d'un agencement d'une douille filetée selon l'une quelconque des revendications 1 à 8 pour le vissage dans un trou (32) d'une pièce (31) en matériau composite, notamment en matière plastique renforcée par des fibres, par exemple en matière plastique renforcée par des fibres de carbone (CFK) ou en matière plastique renforcée par des fibres de verre (GFK).

10. Procédé d'insertion d'une douille filetée conformément à un agencement selon l'une quelconque des revendications 1 à 8 dans un trou (32) d'une pièce (31), dans lequel la douille filetée (30) est vissée dans le trou (32) depuis le côté de la pièce (31) détourné d'une charge de traction, jusqu'à ce que le collet (1) s'applique sur le bord du trou (32), puis est bloquée avec la pièce (31) par élargissement radial de la douille filetée (30), une vis (33) étant vissée dans la douille filetée (30) et la vis (33) étant chargée de telle sorte que le collet (1) est chargé en pression.

11. Procédé selon la revendication 10, dans lequel l'élargissement radial est effectué en formant un filetage dans une section de la douille filetée (30) ne présentant pas de filetage avant l'insertion de la douille filetée dans le trou de la pièce (31).
